# EUROPEAN PATENT APPLICATION

(11) **EP 2 151 384 A2**
(43) Date of publication of application: **10.02.2010**
(21) Application number: 09167111.5
(22) Date of filing: 03.08.2009
(51) Int. Cl.: B64D 45/04

(54) **Systems and methods for improving pilot situational awareness during landing**

(30) Priority: 05.08.2008 US 186386
(71) Applicant: Honeywell International, Inc., Morristown NJ 07962 (US)
(72) Inventor: Conner, Kevin J., Morristown, NJ 07962-2245 (US); Ishihara, Yasuo, Morristown, NJ 07962-2245 (US); Bateman, C. Don, Morristown, NJ 07962-2245 (US)
(74) Representative: Buckley, Guy Julian

(57) **Abstract**

Systems and methods for generating an alert to the pilot of an aircraft during a deep/long landing situation. An example system (100) includes a database (103) that stores runway information, a position sensor that produces aircraft position information and a processor (101) that is in data communication with the database and the position sensor. The processor includes an advisory condition detection component (119) that compares altitude of the aircraft to a predefined altitude limit, determines if the aircraft is beyond an airline defined landing zone limit and not on the ground, and generates an alert to the pilot based upon the comparison and the determination. An output device (133, 136) outputs the generated alert. The airline defined landing zone limit is a fixed distance value from the approach end of a runway or a percentage of the total length of a runway, whichever allows for greatest amount of runway remaining.

## Description

### BACKGROUND OF THE INVENTION

During a landing, the pilot can overshoot the target landing zone. Many airlines have Standard Operating Procedures (SOP) for allowed tolerances on the landing zone. However, there does not exist any systems that provide feedback to the pilot when their company SOP landing zone has been exceeded. Information of this type would provide timely feedback for pilots, thus leading to improved decision making during landings.

### SUMMARY OF THE INVENTION

The present invention provides systems and methods for generating an alert to the pilot of an aircraft during a deep/long landing situation. An example system includes a database that stores runway information, a position sensor that produces aircraft position information and a processor that is in data communication with the database and the position sensor. The processor includes an advisory condition detection component that compares altitude of the aircraft to a predefined altitude limit, determines if the aircraft is beyond an airline defined landing zone limit and has not touched down, and generates an alert to the pilot based upon the comparison and the determination. An output device outputs the generated alert.

In one aspect of the invention, the airline defined landing zone limit is a fixed distance value from the approach end of a runway or a percentage of the total length of a runway.

In one aspect of the invention, the airline defined landing zone limit is a fixed distance value from the approach end of a runway or a percentage of the total length of a runway, whichever allows for greatest amount of runway remaining.

### BRIEF DESCRIPTION OF THE DRAWINGS

Preferred and alternative embodiments of the present invention are described in detail below with reference to the following drawings:

FIGURE 1 is an exemplary system for providing pilot situation awareness during a long landing according to an embodiment of the present invention;

FIGURE 2 is a perspective view of an aircraft landing beyond SOP landing zone limits; and

FIGURE 3 is a flow diagram of an example process performed by the system shown in FIGURE 1.

### DETAILED DESCRIPTION OF THE PREFERRED EMBODIMENT

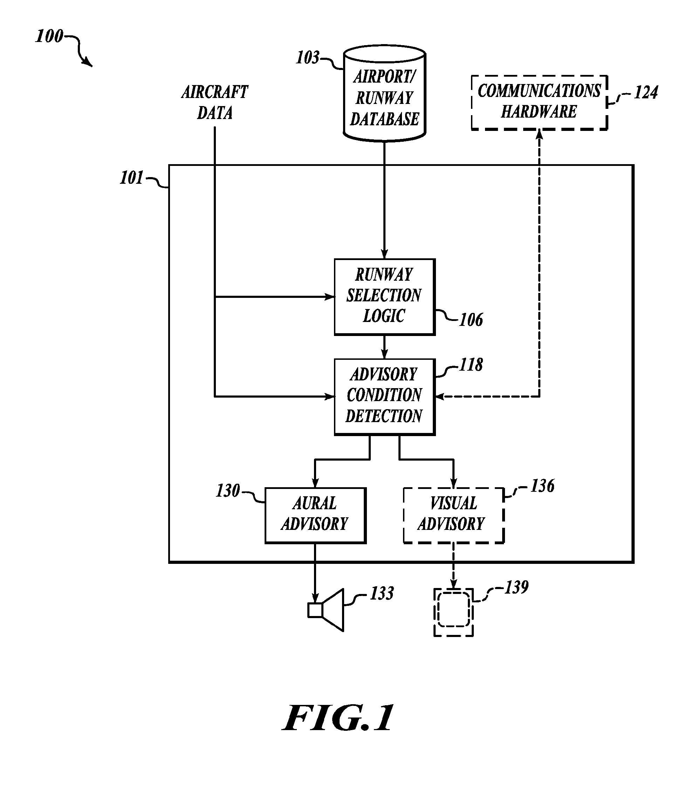

FIGURE 1 illustrates a non-limiting example of a system 100 that provides alerts to a flight crew when landing an aircraft beyond SOP landing zone limits. The system 100 monitors the aircraft's progress during the landing and determines if the aircraft is still attempting to land outside of landing zone limits as defined by SOP for the particular airline associated with the aircraft.

Aircraft position information (aircraft data) is input to a processing device 101. At a runway selection logic component 106 executed by the processing device 101, the received aircraft position information is compared to runway position information stored in a runway database 103 to determine whether a landing on any of the retrieved runways is likely based upon the position of the aircraft and the flight characteristics of the aircraft. Other methods for selecting a runway can be used, such as manual selection. Once a relevant runway is determined, an advisory condition detection component 118 determines whether an advisory condition exists based on the determined likely runway information and the aircraft position information.

The advisory condition detection component 118 receives the aircraft position information from a position sensing system (e.g. GPS, IRU). Communications hardware 124 could be used instead to receive aircraft position data from other sources, such as aircraft position information received from an airport tower based upon air traffic control radar. The aircraft position information is presented to the advisory condition detection component 118 for comparison with an advisory envelope.

If the advisory condition detection component 118 determines the aircraft is within the advisory envelope (beyond a threshold distance from the approach end of the selected runway, still airborne and below an altitude threshold limit), the advisory condition detection component 118 triggers an alert. For example, an aural advisory component 130 generates an audible alert through an audio system 133 and/or a visual advisory component 136 generates a visual alert for display on a display 139. The threshold distance is either a fixed limit (e.g. 2000 ft. (700 meters)) or a percentage of the total runway length (e.g. 80% of runway remaining). The threshold distance chosen is the one of the fixed limit or percentage that would provide the greatest amount of runway remaining.

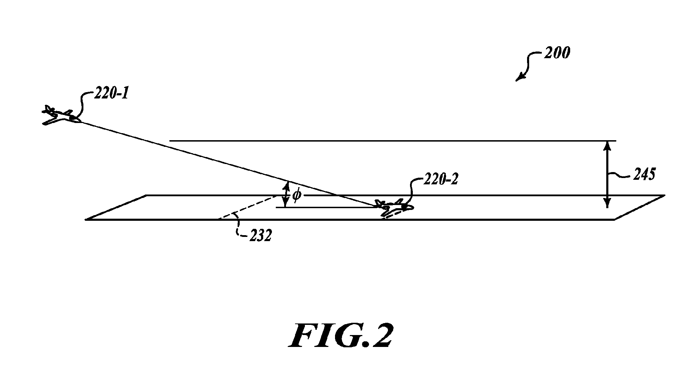

FIGURE 2 is a perspective view of an aircraft 220-1 the runway landing environment 200 and an altitude limit 245 that is a height above runway value (e.g., radio altitude). The advisory condition detection component 118 generates one or more deep landing alerts when the height of the aircraft 220-2 is less than the altitude limit 245 (e.g., 100 feet), is beyond the SOP landing threshold limit 232 and is still in the air. The alerts cease when the aircraft 220-2 lands, executes a missed approach, or is manually deactivated. Various techniques may be used to determine when the aircraft is on the ground or executing a missed approach. For example, vertical speed or throttle position may be used to indicate a missed approach or an intent to land. Radio Altitude or Weight-on-Wheels switch may be used to determine if the aircraft is on the ground.

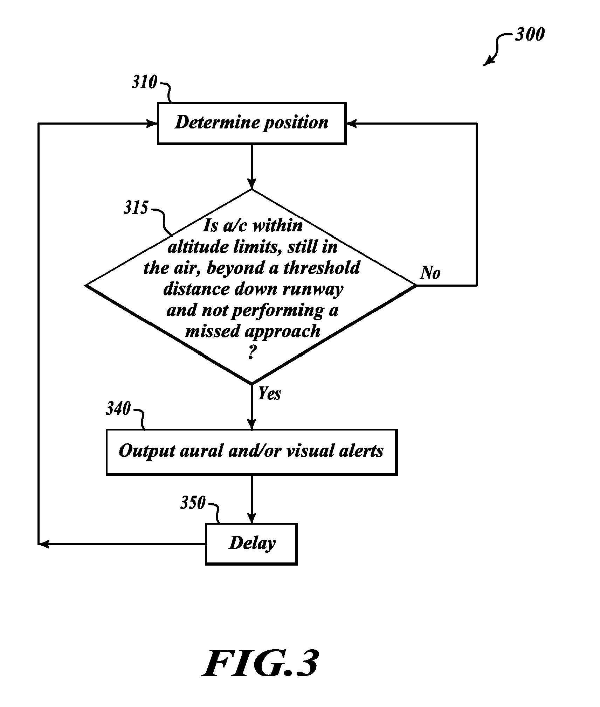

FIGURE 3 is a flowchart for an embodiment of a process 300 for alerting a flight crew when they are beyond an SOP landing limit. First, at a block 310, three-dimensional aircraft position is determined. Next, at a decision block 315, the processing device 101 determines if the aircraft is within altitude limits (range), still in the air, beyond the SOP threshold distance past the approach end of the runway, and not performing a missed approach. If the above conditions are not satisfied, then the process 300 returns to the block 310. If the above conditions are satisfied, then an aural and/or visual alert is outputted to the flight crew to inform them that they are landing deep/long, block 340. After the alert is outputted, a delay occurs (block 350) before the process 300 returns to the block 310. The pilot would then react to the deep landing alert according to the SOP.

An alert (aural and/or visual) is generated to indicate a long or deep landing (one past an SOP landing limit). For example, one airline has landing targets of 1000 ft., 2000 ft., and 1500 ft, for the various categories for aircraft in their fleet. Their SOP sets a limit of 2000 ft. from the approach end of the runway for one category of aircraft and a missed approach must be executed by 2500 ft. This system announces an aural message to a flight crew when the aircraft has reached the 2500 ft. mark without landing to aid in timing for beginning the missed approach/go around. An example outputted alert message is "Deep Landing".
The embodiments of the invention in which an exclusive property or privilege is claimed are defined as follows:

## Claims

1. A method for alerting a pilot of an aircraft during a deep landing situation, the method comprising:
receiving a position of the aircraft;
comparing altitude of the aircraft to a predefined altitude limit;
determining if the aircraft is beyond an airline defined landing zone limit and not on the ground; and
generating an alert to the pilot based upon the comparison and the determination.

2. The method of Claim 1, wherein the predefined altitude limit is a height above runway value.

3. The method of Claim 1, wherein generating the alert includes generating an aural warning, wherein the aural warning includes a deep landing alert.

4. The method of Claim 1, wherein generating the alert includes generating a visual warning on a display, wherein the visual warning includes a deep landing alert.

5. The method of Claim 1, wherein the airline defined landing zone limit is a fixed distance value from the approach end of a runway, a percentage of the total length of a runway or a fixed distance value from the approach end of a runway or a percentage of the total length of a runway, whichever allows for greatest amount of runway remaining.

6. A system for generating an alert to the pilot of an aircraft during a deep landing situation, the system comprising:
a database (103) comprising runway information;
a position sensor configured to produce aircraft position information;
a processor (101) in data communication with the database and the position sensor, the processor comprising:
an advisory condition detection component (118) configured to compare altitude of the aircraft to a predefined altitude limit, determine if the aircraft is beyond an airline defined landing zone limit and not on the ground, and generate an alert to the pilot based upon the comparison and the determination; and
an output device (133, 139) configured to output the generated alert.

7. The system of Claim 6, wherein the airline defined landing zone limit is a fixed distance value from the approach end of a runway.

8. The system of Claim 6, wherein the airline defined landing zone limit is a percentage of the total length of a runway.

9. The system of Claim 6, wherein the airline defined landing zone limit is a fixed distance value from the approach end of a runway or a percentage of the total length of a runway, whichever allows for greatest amount of runway remaining.

10. The system of Claim 6, wherein the output device includes one of an aural or visual device.
